# EUROPEAN PATENT APPLICATION

(11) **EP 4 580 003 A1**
(43) Date of publication of application: **02.07.2025**
(21) Application number: 24215704.8
(22) Date of filing: 27.11.2024
(51) Int. Cl.: H02K 1/18, H02K 5/20, H02K 9/19

(54) **MOTOR**

(30) Priority: 26.12.2023 JP 2023219892
(71) Applicant: TOYOTA JIDOSHA KABUSHIKI KAISHA, Aichi-ken, 471-8571 (JP)
(72) Inventor: NAGASAWA, Naohiro, Toyota-shi, Aichi-ken, 471-8571 (JP); MAENO, Tomoaki, Toyota-shi, Aichi-ken, 471-8571 (JP); OHIRA, Kengo, Toyota-shi, Aichi-ken, 471-8571 (JP); KAJIMOTO, Shogo, Toyota-shi, Aichi-ken, 471-8571 (JP); MASUGI, Yutaka, Toyota-shi, Aichi-ken, 471-8571 (JP); NAGAI, Shingo, Toyota-shi, Aichi-ken, 471-8571 (JP); MANABE, Hideki, Toyota-shi, Aichi-ken, 471-8571 (JP)
(74) Representative: TBK

(57) **Abstract**

A motor (2) includes a stator core (8) and a housing (20). The housing holds the stator core (8) from an outer side. The housing includes an end holding portion (24) extending beyond a first end face of the stator core (8) to one side in the axial direction and having an abutting face abutting the first end face, and a coolant channel (30;30';130;230;330;430) passing through the housing (20) in the axial direction. The first end face is an end face on the one side in the axial direction of the stator core (8). The coolant channel (30;30';130;230;330;430) includes a channel for circulating the coolant closer to the stator core (8) in the end holding portion (24) than at the second end face or in a vicinity of the second end face. The second end face is an end face on an other side in the axial direction of the stator core (8).

## Description

### BACKGROUND OF THE INVENTION

### 1. Field of the Invention

The present disclosure relates to a motor.

### 2. Description of Related Art

Japanese Unexamined Patent Application Publication No. 2014-68513 (JP 2014-68513 A) discloses cooling a stator core of a motor by using water as a coolant that flows within a peripheral wall of a housing that holds an outer side of the stator core in a radial direction.

### SUMMARY OF THE INVENTION

The housing may have a stepped portion that abuts against an end face of one end of the stator core in a longitudinal direction and protrudes to the inner side of the stator core in the radial direction. Surface area increases at the stepped portion, and accordingly it is desirable to improve cooling performance thereof. Also, no attempt has been made to effectively cool ends of the stator core by utilizing the stepped portions.

The present disclosure provides a motor that improves cooling performance in a stepped portion of a housing that holds a stator core.

A motor according to an aspect of the present disclosure includes a stator core that is an annular body extending along an axial direction parallel to a central axis of the motor, and a housing. The housing is configured to hold the stator core from an outer side in a radial direction. The housing includes an end holding portion extending on one side in the axial direction beyond a first end face of the stator core and also including an abutting face abutting the first end face, and a coolant channel passing through the housing in the axial direction. The first end face is an end face on the one side in the axial direction of the stator core. The coolant channel includes a channel for circulating coolant closer to the stator core in the end holding portion than at a second end face or in a vicinity of the second end face. The second end face is an end face on an other side in the axial direction of the stator core.

According to the above motor, the coolant flows through the coolant channel that passes through the housing closer to the stator core at the end holding portion that holds the first end face of the stator core than at the second end face or in the vicinity of the second end face, whereby cooling performance of the end holding portion can be improved. That is to say, according to this the coolant channel and the end holding portion, an end including the first end face of the stator core can be effectively cooled from both the radial direction and the axial direction.

In the motor according to an aspect of the present disclosure, the coolant channel may include a channel that widens as the channel extends toward the end holding portion.

According to the above configuration, the cooling performance of the end holding portion in both the radial direction and the axial direction can be easily improved.

In the motor according to an aspect of the present disclosure, the coolant channel may include a channel that extends so as to gradually near the stator core as the channel extends toward the end holding portion.

According to the above configuration, the cooling performance of the end holding portion can be further effectively improved.

In the motor according to an aspect of the present disclosure, the coolant channel may include a channel that extends from the second end face or the vicinity of the second end face so as to gradually near the stator core as the channel extends toward the end holding portion.

According to the above configuration, the cooling performance of the end holding portion can be even further effectively improved.

In the motor according to an aspect of the present disclosure, the coolant channel may include a bent channel that bends in the end holding portion so as to near the stator core.

In the motor according to an aspect of the present disclosure, the bent channel may be bent on the one side in the axial direction beyond the first end face.

According to the above configuration, the cooling performance for the first end face or the vicinity thereof can be improved.

In the motor according to an aspect of the present disclosure, the coolant channel may extend in the axial direction with a substantially uniform cross-sectional area.

According to the above configuration, the cooling performance for the first end face or the vicinity thereof can be improved stably regardless of the direction of flow of the coolant in the axial direction of the stator core.

In the motor according to an aspect of the present disclosure, the coolant may be water.

By using water as the coolant, the motor can be cooled by a cooling system different from a cooling system that uses oil as the coolant.

In the motor according to an aspect of the disclosure, the housing may be a cylindrical body that covers an outer periphery of the stator core and includes a cover that covers the first end face and the second end face of the stator core.

According to the above configuration, the motor is separated from the outside by the housing, and can be effectively cooled.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a radial-direction cross-sectional view of a stator core, illustrating the stator core, a housing, and a coolant channel in a motor;
FIG. 1B is a cross-sectional view taken along line b-b in FIG. 1A;
FIG. 2A is a radial-direction cross-sectional view of the stator core, illustrating another form of the coolant channel;
FIG. 2B is a cross-sectional view taken along line b-b in FIG. 2A, illustrating another form of the coolant channel;
FIG. 3 is a radial-direction cross-sectional view of the stator core, illustrating another form of the coolant channel;
FIG. 4 is a radial-direction cross-sectional view of the stator core, illustrating another form of the coolant channel;
FIG. 5 is a radial-direction cross-sectional view of the stator core, illustrating another form of the coolant channel; and
FIG. 6 is a radial-direction cross-sectional view of the stator core, illustrating another form of the coolant channel.

### DETAILED DESCRIPTION OF EMBODIMENTS

A motor disclosed in the present specification will be described below with reference to the drawings as appropriate. In the specification, the motor is not limited in particular, but may be, for example, a traction motor installed in an electrified vehicle, or may be part of an e-Axle or the like. The electrified vehicle is a battery electric vehicle (BEV), a hybrid electric vehicle (HEV), a plug-in hybrid electric vehicle (PHEV), a fuel cell electric vehicle (FCEV), or the like. An upper side of the motor in a gravitational direction when installed in a vehicle is referred to as the "upper side in vertical direction," and a lower side in the gravitational direction is referred to as the "lower side in vertical direction." Also, in the present specification, simply referring to "axial direction" means an axial direction of a stator or a stator core that the motor is equipped with, simply referring to "circumferential direction" means a circumferential direction of the stator or stator core, and simply referring to "radial direction" means a radial direction of the stator or the stator core.

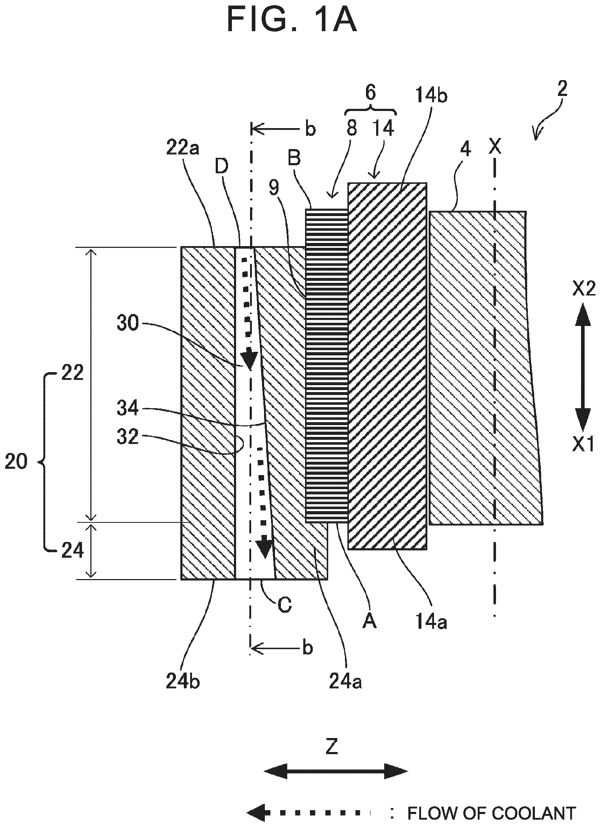

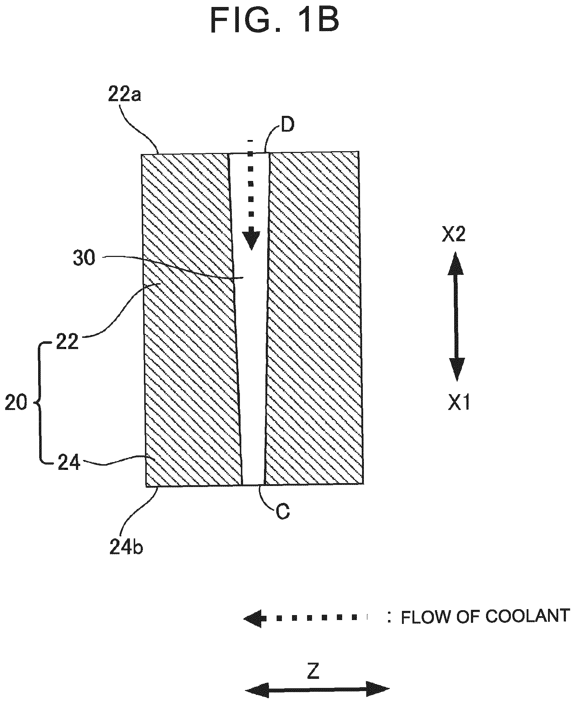

FIG. 1A is a cross-sectional view along the radial direction of a stator 6 of a motor 2 installed in a vehicle, and FIG. 1B is a cross-sectional view taken along line b-b in FIG. 1A. Note that in the drawings, the vertical direction in the present specification is indicated by Z.

The motor 2 includes a rotor 4, the stator 6, and a housing 20 that holds the stator 6. The motor 2 has a rotation axis X, and the rotor 4 is supported so as to be rotatable about the rotation axis X. In one example, the motor 2 may be disposed such that the rotation axis X thereof is horizontal. The stator 6 includes a stator core 8 and a coil 14. Note that in the present specification and the drawings, one side in the axial direction along the rotation axis X is described as X1, and an other side is described as X2.

The stator core 8 is an annular body centered on the rotation axis X of the motor 2, and extends in the axial direction from one end face A to another end face B. The stator core 8 is made of a soft magnetic material such as magnetic steel, and may be, for example, a laminate of magnetic steel sheets. The rotor 4 is disposed in a middle hole portion of the stator core 8. The stator core 8 includes a back yoke that is annular in shape and that makes up an outer peripheral portion of the stator core 8, a plurality of teeth (omitted from illustration) that protrude inward in the radial direction along the circumferential direction from the back yoke, and a plurality of slots (omitted from illustration) that are formed between adjacent teeth.

The coil 14 is made up by winding a conducting wire around the teeth of the stator core 8. The coil 14 forms coil ends 14a and 14b that protrude from the end face A and the end face B of the stator core 8, respectively. Note that in FIG. 1A, the coil 14 and the coil ends 14a and 14b are illustrated in a simplified manner. Note that connection forms and so forth of the conducting wire for forming the coil 14 are not limited in particular. The end face A and the end face B are examples of a first end face on one side in the axial direction and a second end face on the other side in the axial direction, respectively, in the present specification.

The housing 20 has a cylindrical form. The housing 20 includes a peripheral wall 22 and an end holding portion 24. The peripheral wall 22 is a portion of the housing 20 that abuts against an outer peripheral face 9 of the stator core 8. The peripheral wall 22 holds the stator core 8 from an outer side in the radial direction. The peripheral wall 22 has an end 22a located in the vicinity of the end face B, and abuts against the outer peripheral face 9 of the stator core 8 from the end 22a to a position of the end face A of the stator core 8. In FIG. 1A, the end 22a of the peripheral wall 22 is defined at a position spaced a predetermined distance from the end face B of the stator core 8 on one side in the axial direction.

Note that the end 22a of the peripheral wall 22 is set at the end face B or in the vicinity thereof as appropriate, depending on cooling functions of the peripheral wall 22, holding functions of the housing 20, the amount of protrusion of the coil end 14b, and so forth.

The end holding portion 24 is located on one side in the axial direction with respect to the peripheral wall 22. The end holding portion 24 is a portion of the housing 20 that extends beyond the end face A of the stator core 8 to one side in the axial direction. The end holding portion 24 also has a stepped portion 24a. The stepped portion 24a extends inward in the radial direction of the stator core 8 along the end face A of the stator core 8. The stepped portion 24a abuts against the end face A of the stator core 8, and the end holding portion 24 holds the stator core 8 from one side in the axial direction. The dimension of the end holding portion 24 in the axial direction is set as appropriate, based on the coolant functions of the end holding portion 24, the holding functions of the housing 20, space around the motor 2, and so forth.

The peripheral wall 22 and the end holding portion 24 of the housing 20 are firmly integrated with the outer peripheral face 9 and the end face A of the stator core 8 to hold the stator core 8. For example, the housing 20 is joined to the stator core 8 by shrink fitting.

The housing 20 may further include covers (omitted from illustration) that cover the end face A and the end face B of the stator core 8, respectively. The covers are attached to the end 22a of the peripheral wall 22 and an end 24b of the end holding portion 24. A pipe may be provided connecting coolant channels 30 in space defined by the end faces A and B of the stator core 8 and the covers. Both the housing 20 and the covers are made of a metal material, such as aluminum or the like.

The housing 20 includes the coolant channel 30 that passes through, extending over the peripheral wall 22 and the end holding portion 24, from the end 22a on the other side in the axial direction of the peripheral wall 22 of the stator core 8 to the end 24b on the one side in the axial direction of the end holding portion 24. In the present embodiment, water is used as coolant. Note that the coolant is not limited in particular, and known oil-based liquids that can be used to cool a motor or the like can be used as appropriate. A plurality of the coolant channels 30 is provided along the circumferential direction.

Cross-sectional shapes of the coolant channels 30 in a plane perpendicular to the axial direction are not limited in particular, and may be, for example, circular, oval, rectangular, trapezoidal, and so forth.

The coolant channel 30 has an end D at the end 22a on the other side in the axial direction of the peripheral wall 22, and has an end C at the end 24b on the one side in the axial direction of the end holding portion 24. The coolant channel 30 extends so as to gradually near the outer peripheral face 9 of the stator core 8 as the coolant channel 30 extends from the end D toward the end C. For example, as illustrated in FIG. 1A, as the coolant channel 30 extends from the end D toward the end C, a radially-outward end face 32 of the coolant channel 30 extends in the axial direction, while a radially-inward end face 34 of the coolant channel 30 is oblique so as to gradually near the outer peripheral face 9 of the stator core 8. As a result, the cross-section of the coolant channel 30 becomes longer in the radial direction. Also, the radially-inward end face 34 at the end C side (one side in the axial direction) of the coolant channel 30 is situated farther on the inner side in the radial direction of the stator core 8 than the radially-inward end face 34 at the end D side of the coolant channel 30.

Also, as illustrated in FIG. 1B, the coolant channel 30 is formed such that the width thereof along the circumferential direction gradually decreases from the end D toward the end C, and the cross-sectional area of the coolant channel 30 is formed so as to be approximately constant along the axial direction.

Next, cooling effects on the motor 2 will be described. As illustrated in FIG. 1A, when a coolant is supplied to the coolant channel 30 from the end D, the coolant flows through the coolant channel 30 toward the end C. Thus, the stator core 8 is cooled from the outer side in the radial direction.

The cross-sectional area of the coolant channel 30 is substantially constant over the length thereof, and accordingly the coolant can flow in the axial direction, sufficiently filling the coolant channel 30. The coolant channel 30 flows even closer to the outer peripheral face 9 and the end face A of the stator core 8 at the end holding portion 24 on the one side in the axial direction of the housing 20. Accordingly, the cooling performance for the stator core 8 at the end holding portion 24 abutting against the end face A of the stator core 8 is improved. In particular, the stepped portion 24a of the end holding portion 24 abuts the end face A, and accordingly the cooling performance of the stator core 8 can be improved not only from the outer side in the radial direction thereof, but also from the end face A, i.e., from the one side in the axial direction of the stator core 8.

Also, the cross-sectional area of the coolant channel 30 in the axial direction is substantially the same, and accordingly when multiple coolant channels 30 are provided within the housing 20, this is convenient for circulating the coolant in these multiple coolant channels 30.

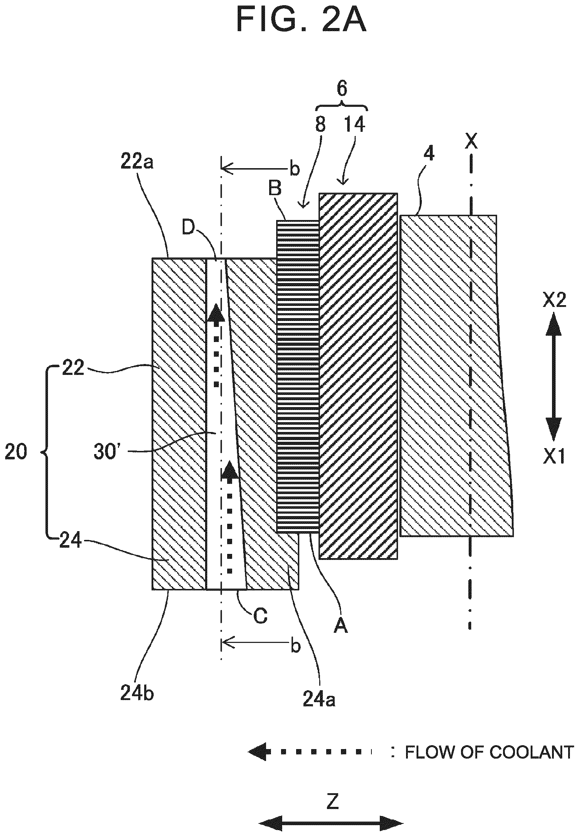

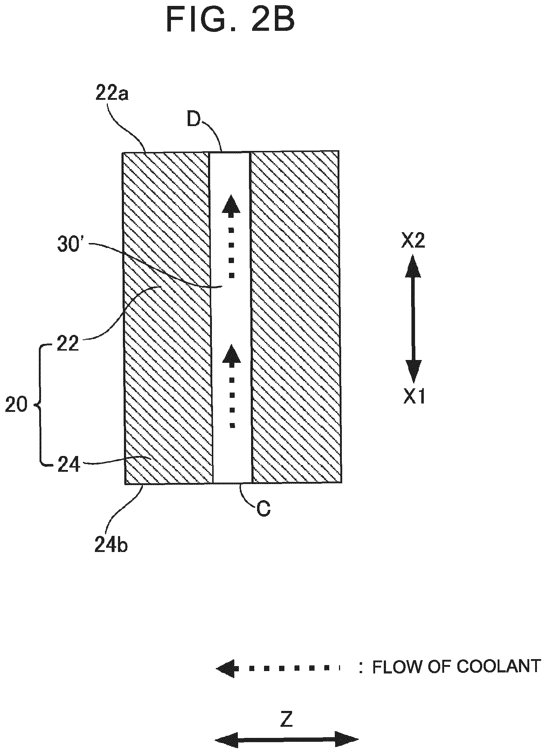

In the above embodiment, the width of the coolant channel 30 in the circumferential direction is narrowed from the end D toward the end C, and thus the cross-sectional area of the coolant channel 30 is not limited to being substantially constant in the axial direction. For example, as illustrated in FIGS. 2A and 2B, a coolant channel 30' may be configured similarly to the coolant channel 30, except that the width thereof along the circumferential direction does not gradually decrease from the end D toward the end C, and is maintained constant. The coolant channel 30' nears the stator core 8 more at the end C side (one side in the axial direction) than at the end D side (the other side in the axial direction), and has a larger cross-sectional area, thereby enabling a greater amount of coolant to flow. In the coolant channel 30' as well, the direction of flow of the coolant in the coolant channel 30' is a direction from the end C toward the end D, and accordingly sufficient coolant can be supplied to the end holding portion 24 of the coolant channel 30' closer to the stator core 8. Thus, the cooling performance of the end holding portion 24, i.e., the cooling performance for the end face A of the stator core 8 held by the end holding portion 24 or the vicinity thereof (one side in the axial direction) can be improved. In particular, the cooling performance from the end face A side can be improved.

In the above embodiment, the motor 2 has been described as having the rotation axis X perpendicular to the vertical direction, but this is not restrictive, and the motor 2 may have a rotation axis aligned with the vertical direction.

In the above embodiment, an example has been illustrated in which the coolant channel 30 gradually nears the stator core 8 from the end D toward the end C, but the coolant channel 30 can also take various other forms.

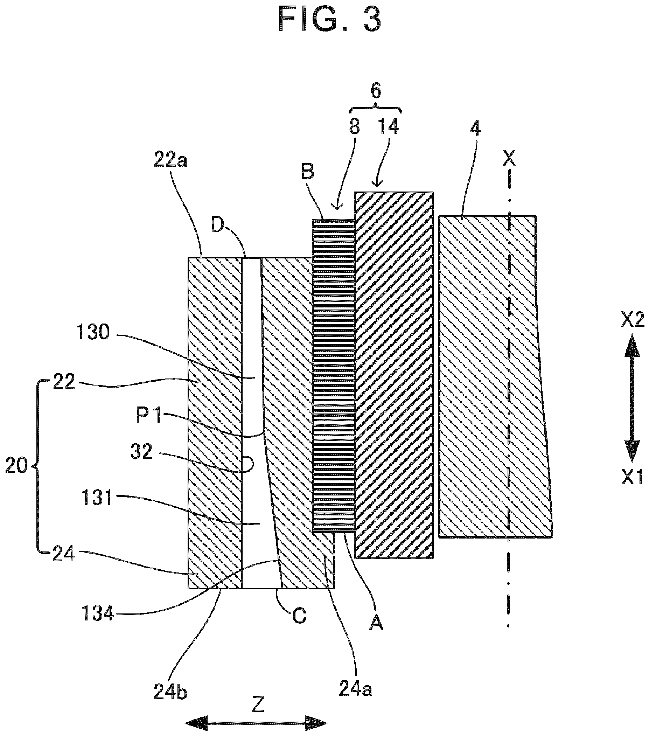

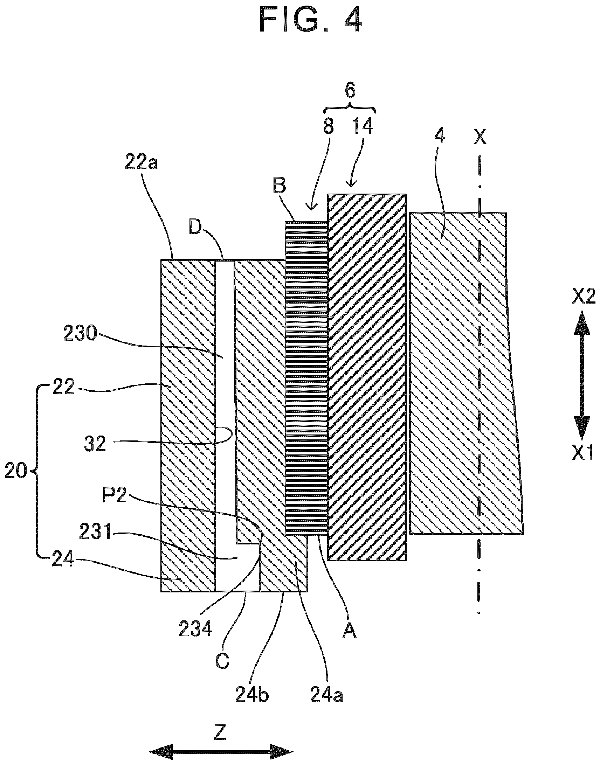

For example, as illustrated in FIGS. 3 and 4, coolant channels 130 and 230 may extend along the axial direction to an optional position P along the way from the end D toward the end C, and may extend so as to near the stator core 8 with positions P1 and P2 as base points. The optional positions P1 and P2 may be positions on the peripheral wall 22 of the housing 20 closer to the end face A of the stator core 8, or may be positions closer to the end holding portion 24 or positions on the one side in the axial direction beyond the end face A of the stator core 8.

The coolant channel 130 illustrated in FIG. 3 has an oblique channel 131 partially on just the radially-inward end face 134 that extends so as to gradually near the stator core 8, with the position P1 toward to the end holding portion 24 of the peripheral wall 22 as a base point. The length of the oblique channel 131 in the radial direction gradually increases. The coolant channel 230 illustrated in FIG. 4 has an expanded channel 231 with just the radially-inward end face 234 extending so as to near the stator core 8 by a predetermined distance, with the position P2 beyond the end face A of the stator core 8 as the base point. The width of the oblique channel 131 and the expanded channel 231 in the circumferential direction may be approximately the same in the axial direction, or may be made to be greater on the end C side (one side in the axial direction), taking into account the direction of coolant flow. The coolant channels 130 and 230 each have the radially-inward end faces 134 and 234 thereof on the end C side positioned further on the inner side in the radial direction of the stator core 8 relative to the radially-inward end faces 134 and 234 on the end D side (other side in the axial direction). The coolant channels 130 and 230 respectively include the oblique channel 131 and the expanded channel 231, enabling a greater amount of the coolant to flow more near to the stator core 8 at the end holding portion 24, thereby improving the cooling performance at the end holding portion 24 in both the radial direction and the axial direction.

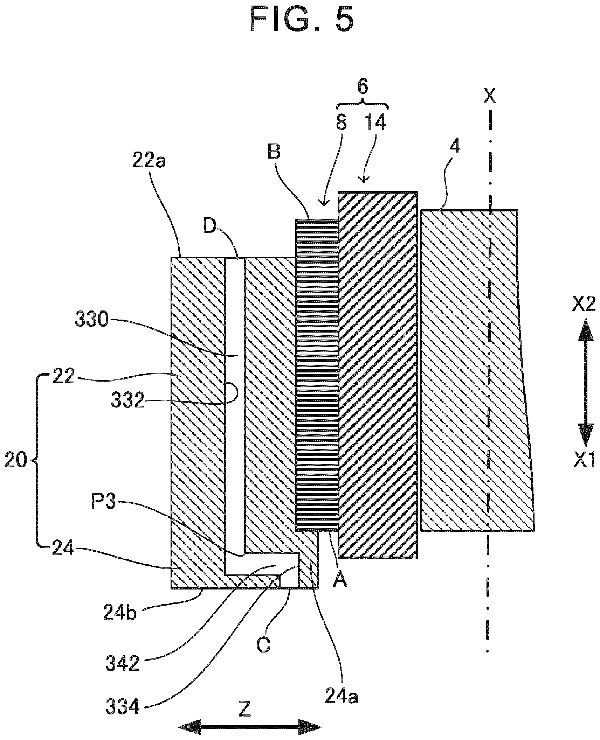

Also, for example, as illustrated in FIG. 5, the coolant channel 330 extends in the axial direction to an optional position P3 on the way from the end D to the end C, and has a bent channel 342 that bends from the position P3 as a base point to near the stator core 8, and then bends further toward one side in the axial direction. The optional position P3 may be on the end face A of the stator core 8 or in the vicinity thereof. For example, as illustrated in FIG. 5, the position P3 is formed beyond the end face A on the one side in the axial direction. The width of the coolant channel 330 in the circumferential direction may be substantially uniform in the axial direction, or may be greater on the end C side. The coolant channel 330 has a radially-inward end face 334 on the end C side located inward in the radial direction of the stator core 8 relative to the radially-inward end face 334 on the end D side. A radially-outward end face 332 may be bent along with the radially-inward end face 334 so as to form the bent channel 342 such as illustrated in FIG. 5, although this is not limiting in particular. Providing the coolant channel 330 with the bent channel 342, enables a greater amount of the coolant to flow closer to the stator core in the end holding portion 24, thereby improving the cooling performance in the end holding portion 24.

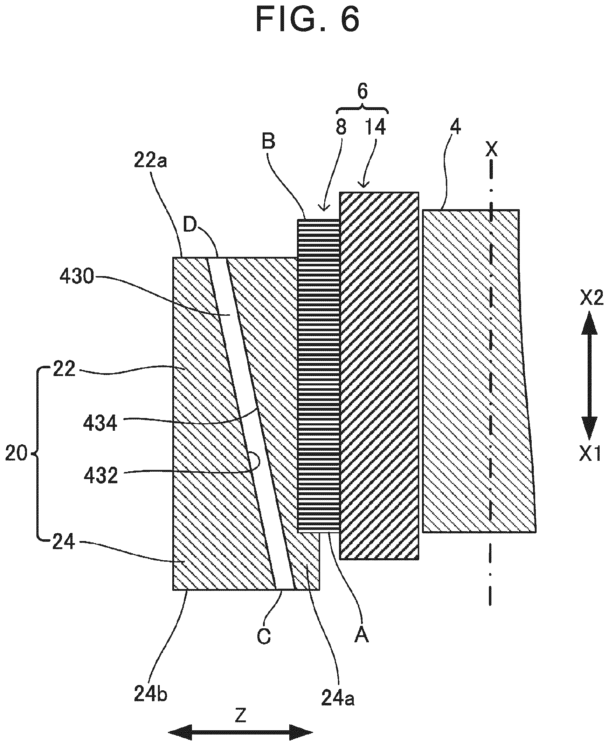

Also, for example, as illustrated in FIG. 6, a coolant channel 430 may be a channel having an overall oblique shape in which a radially-outward end face 432 and a radially-inward end face 434 of the coolant channel 430 are gradually obliquely oriented so as to near the outer peripheral face 9 of the stator core 8 from the end D toward the end C. The coolant channel 430 has a substantially constant length along the radial direction over the direction of extension thereof. The width of the coolant channel 430 in the circumferential direction may be substantially uniform in the axial direction, or may be greater on the end C side. The coolant channel 430 has the radially-inward end face 434 on the end C located inward in the radial direction of the stator core 8 relative to the radially-inward end face 434 on the end D. Providing the coolant channel 430 with the oblique form enables a greater amount of the coolant to flow closer to the stator core in the end holding portion 24, thereby improving the cooling performance in the end holding portion 24.

According to the disclosure of the present specification, the present specification can include the following configurations.
[1] A motor includes a stator core that is an annular body extending along an axial direction parallel to a central axis of the motor, and
   a housing that holds the stator core from an outer side in a radial direction, wherein
   the housing includes an end holding portion extending on one side in the axial direction beyond a first end face that is an end face on the one side in the axial direction of the stator core, and also including an abutting face abutting the first end face, and a coolant channel passing through the housing in the axial direction, and
   the coolant channel includes a channel for circulating coolant closer to the stator core in the end holding portion than to a second end face or a vicinity of the second end face that is an end face on an other side in the axial direction of the stator core.
[2] The motor according to [1], wherein the coolant channel includes a channel that widens as the channel extends toward the end holding portion.
[3] The motor according to [1] or [2], wherein the coolant channel includes a channel that extends so as to gradually near the stator core as the channel extends toward the end holding portion.
[4] The motor according to [3], wherein the coolant channel includes a channel that extends from the second end face or the vicinity of the second end face so as to gradually near the stator core as the channel extends toward the end holding portion.
[5] The motor according to any one of [1] to [4], wherein the coolant channel includes a bent channel that bends in the end holding portion so as to near the stator core.
[6] The motor according to [5], wherein the bent channel is bent on the one side in the axial direction beyond the first end face.
[7] The motor according to any one of [1] to [6], wherein the coolant channel extends in the axial direction with a substantially uniform cross-sectional area.
[8] The motor according to any one of [1] to [7], wherein the coolant is water.
[9] The motor according to any one of [1] to [8], wherein the housing is a cylindrical body that covers an outer periphery of the stator core and includes a cover that covers the first end face and the second end face of the stator core.

Although specific examples of the technology disclosed in the present specification have been described in detail above, these are merely exemplary and do not limit the scope of claims. The technology described in the claims includes various modifications and alterations of the specific example exemplified above. The technical elements described in the present specification or illustrated in the drawings exhibit technical utility solely or in various combinations, and are not limited to the combinations described in the claims at the time of filing. The technology exemplified in the present specification or the drawings can achieve a plurality of objects at the same time, and has technical utility in itself by achieving one of the objects.

## Claims

1. A motor (2), comprising:
a stator core (8) being an annular body extending along an axial direction parallel to a central axis of the motor (2); and
a housing (20) configured to
hold the stator core (8) from an outer side in a radial direction, and
include an end holding portion (24) extending on one side in the axial direction beyond a first end face of the stator core (8) and including an abutting face abutting the first end face, and a coolant channel (30;30';130;230;330;430) passing through the housing (20) in the axial direction, wherein
the first end face is an end face on the one side in the axial direction of the stator core (8), the coolant channel (30;30';130;230;330;430) includes a channel for circulating coolant closer to the stator core (8) in the end holding portion (24) than at a second end face or in a vicinity of the second end face, and the second end face is an end face on an other side in the axial direction of the stator core (8).

2. The motor (2) according to claim 1, wherein the coolant channel (30;30';130;230;330;430) includes a channel that widens as the channel extends toward the end holding portion (24).

3. The motor (2) according to claim 1, wherein the coolant channel (30;30';130;230;330;430) includes a channel that extends so as to gradually near the stator core (8) as the channel extends toward the end holding portion (24).

4. The motor (2) according to claim 3, wherein the coolant channel (30;30';130;230;330;430) includes a channel that extends from the second end face or the vicinity of the second end face so as to gradually near the stator core (8) as the channel extends toward the end holding portion (24).

5. The motor (2) according to claim 1, wherein the coolant channel (30;30';130;230;330;430) includes a bent channel that bends in the end holding portion (24) so as to near the stator core (8).

6. The motor (2) according to claim 5, wherein the bent channel is bent on the one side in the axial direction beyond the first end face.

7. The motor (2) according to claim 1, wherein the coolant channel (30;30'; 130;230;330;430) extends in the axial direction with a substantially uniform cross-sectional area.

8. The motor (2) according to any one of claims 1 to 7, wherein the coolant is water.

9. The motor (2) according to any one of claims 1 to 7, wherein the housing (20) is a cylindrical body that covers an outer periphery of the stator core (8) and includes a cover that covers the first end face and the second end face of the stator core (8).
